(19) Europäisches Patentamt
European Patent Office
Office européen des brevets

(11) Publication number: **0 228 471 B1**

(12) **EUROPEAN PATENT SPECIFICATION**

(45) Date of publication of patent specification: **15.09.93** (51) Int. Cl.$^5$: **G05B 19/403**

(21) Application number: **86903614.5**

(22) Date of filing: **24.06.86**

(86) International application number:
**PCT/JP86/00319**

(87) International publication number:
**WO 87/00310 (15.01.87 87/01)**

(54) **ROBOT CONTROL SYSTEM.**

(30) Priority: **25.06.85 JP 138334/85**

(43) Date of publication of application:
**15.07.87 Bulletin 87/29**

(45) Publication of the grant of the patent:
**15.09.93 Bulletin 93/37**

(84) Designated Contracting States:
**DE**

(56) References cited:
**FR-A- 2 321 373**
**JP-A- 6 037 007**
**JP-A-50 112 969**

(73) Proprietor: **FANUC LTD.**
**3580, Shibokusa Aza-Komanba, Oshino-mura**
**Minamitsuru-gun, Yamanashi 401-05(JP)**

(72) Inventor: **KISHI, Hajimu Hinohirayamadai-Jutaku 1104**
**7-8, Asahigaoka 6-chome Hino-shi**
**Tokyo 191(JP)**
Inventor: **SAKAKIBARA, Shinsuke Mezonizumi 101**
**23-3, Higashiizumi 1-chome Komae-shi**
**Tokyo 201(JP)**
Inventor: **KARAKAMA, Tatsuo Fanuc Ut-sukiryou**
**386-1, Ishikawa-machi Hachioji-shi**
**Tokyo 192(JP)**

(74) Representative: **Billington, Lawrence Emlyn et al**
**Haseltine Lake & Co, Hazlitt House, 28,**
**Southampton Buildings, Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 228 471 B1

## Description

### Technical Field

This invention relates to a robot control system in which a predetermined task is executed by teaching a robot the position (hereafter referred to as "TCP") of the distal end of a working member (tool) mounted on the wrist of the robot.

### Background Art

When parts are assembled by using an industrial robot, it is necessary for prescribed parts to be repeatedly supplied to a set position at a predetermined timing by a parts feeder which supplies the parts automatically. However, parts delivered in a flow by a conveyor belt or the like cannot always be accurately supplied to the same position every time. Accordingly, an offset for the TCP that has already been taught for the hand must be corrected by reading, via a TV camera or the like, position information relating to the part to be manipulated, and feeding the information into the robot each time.

In such cases, in accordance with the prior art, an amount of rotational correction obtained from a sensor such as a camera is calculated in terms of displacement of a rotational angle with regard to three basic axes of a hand vector, and the tool offset at a taught position serving as the origin of the correction is corrected by a G45 preparatory code for a position rotating correction.

The position information sent to the robot from the sensor side is data indicative of an angle defined by a workpiece gripping direction vector obtained by data processing on the sensor side, and a predetermined axis, e.g. the Xs axis, of the sensor coordinate system. Meanwhile, the robot calculation control unit stores the sensor coordinates upon converting them into data in the robot coordinate system. Consequently, when a rotational correction for bringing a unit vector (reference vector) in the direction of a predetermined axis, e.g, the Yt axis, of the tool coordinate system into coincidence with a gripping direction vector of the workpiece is performed, which of the X, Y and Z axes of the tool coordinate system the rotational correction will be performed about differs each time a workpiece is supplied. Moreover, control data, stored in the robot, regarding the sensor coordinate system and control data in the tool coordinate system for deciding the feedback data of the robot drive control unit are both processed upon being converted into data indicative of the fundamental coordinate system of the robot. As a result, calculating the amount of rotational correction which brings the reference vector into coincidence with the gripping direction vector is very complicated.

FR-A-2 321 373 discloses a parts transfer system in which a movable manipulator in the form of a gripper hand can grasp parts which are to be transferred. A vision system is used to sense the positions of parts. The vision system has a video scanner which, via a mirror, looks down onto a surface on which parts to be grasped by the gripper hand are presented. The data provided by the video scanner is used to calculate the centroid and orientation of a part to be grasped, and the position of the gripper hand is adjusted accordingly, to enable the hand to grasp the part.

The present invention has been devised in view of the foregoing points and its object is to provide a robot control system capable of performing a tool position correction by simple processing based on position data received from a sensor.

### Disclosure of the Invention

According to the present invention there is provided a robot control system adapted to execute a task at a predetermined position, where a tool of a robot is to grip a workpiece, by correcting tool position offset on the basis of information relating to a gripping direction vector of the workpiece and on the basis of a tool reference vector, the system comprising:-

a sensor, for detecting the position of the workpiece and providing said information indicative of the gripping direction vector of the workpiece, and

a calculation control unit for calculating from said information indicative of the gripping direction vector of the workpiece, and from the tool reference vector, an amount of rotational correction necessary for the tool,

characterised in that

the sensor is arranged on an axis which is or is parallel to the Z-axis of a fixed sensor coordinate system, the X and Y axes of which coordinate system define an X-Y plane which coincides with or is parallel to a surface upon which the workpiece is placed, the sensor having a sensing axis which is or is parallel to the Z-axis of the sensor coordinate system thereby to provide information on the gripping direction vector of the workpiece as projected onto the X-Y plane,

and in that

the calculation control unit is operable to calculate an amount of rotational correction of the tool around an axis which is or is parallel to the Z-axis (Zs) of the sensor coordinate system from the gripping direction vector of the workpiece as projected onto the X-Y plane utilising also the projection of the tool reference vector onto the X-Y plane.

A robot control system according to the present invention is adapted to execute a task at a predetermined position by correcting a tool position offset of a robot based on information indicative of the position of a workpiece. The robot control system has a sensor which, in the sensor coordinate system, is arranged on an axis parallel to the Z-axis of the sensor coordinate system (which parallel axis may be the Z-axis itself) perpendicular to a coordinate plane (X-Y plane) parallel to (or coinciding with) a surface on which the workpiece rests, the coordinate axes of the sensor being fixed, and a calculation control unit for calculating an amount of rotational correction of a tool with regard to the sensor coordinate axes from position information based on a vector indicating the gripping direction of the workpiece sensed by the sensor. If a rotational angle is determined from a projection of the gripping direction vector and the tool is subjected to a rotational correction around an axis parallel to the Z-axis of the sensor coordinate system, perpendicular to the surface on which the workpiece rests, then the tool position offset can be corrected even if the gripping direction vector of the workpiece is not parallel to the surface on which the workpiece rests.

Brief Description of the Drawings

Fig. 1 is an explanatory view illustrating a rotational correction of a tool vector according to an embodiment of the present invention, and Fig. 2 is a structural explanatory view illustrating an example of a robot system according to the above embodiment.

Best Mode for Carrying Out the Invention

An embodiment of the present invention will now be described.

Discussed first will be the manner in which a tool vector subsequent to a tool rotational correction performed in relation to the Zs axis is expressed in the sensor coordinate system Xs-Ys-Zs shown in Fig. 1.

In Fig. 1, $\mathbb{t}$, $\mathbb{u}$, $\mathbb{v}$ denote unit vectors along three axes set for a tool at a robot teach point P, $\mathbb{l}s$, $\mathbb{m}s$, $\mathbb{n}s$ represent unit vectors along three axes of the sensor coordinate system, and $\mathbb{O}s$ denotes the origin of the latter coordinate system.

Let the components of each of the abovementioned vectors in the fundamental coordinate system (X-Y-Z) (not shown) of the robot be expressed as follows:

$$\left.\begin{aligned} \mathbb{l}s &= (Lsx,\ Lsy,\ Lsz)^T \\ \mathbb{m}s &= (Msx,\ Msy,\ Msz)^T \\ \mathbb{n}s &= (Nsx,\ Nsy,\ Nsz)^T \end{aligned}\right\} \quad \ldots (1)$$

From among the unit vectors which decide the tool coordinate system at the teach point P, the vector $\mathbb{u}$ is taken as a reference vector and the components thereof in the sensor coordinate system are expressed as follows:

$$\begin{pmatrix} Usx \\ Usy \\ Usz \end{pmatrix} = \begin{pmatrix} Lsx & Lsy & Lsz \\ Msx & Msy & Msz \\ Nsx & Nsy & Nsz \end{pmatrix} \begin{pmatrix} Ux \\ Uy \\ Uz \end{pmatrix} \quad \ldots (2)$$

where (Usx, Usy, Usz) = $\mathbb{u}$s, and Ux, Uy, Uz are components of the reference vector u expressed in the fundamental coordinate system. These can be calculated from information relating to the teach point P inputted when teaching is performed. If the unit vectors $\mathbb{l}$, $\mathbb{m}$, $\mathbb{n}$ in the sensor coordinate system are also transformed into e.g. the fundamental coordinate system and stored in the robot control system memory in advance, the reference vector us expressed in the sensor coordinate system can be obtained from Eq. (2).

Next, an angle $\theta$tch defined by the X-axis vector $\mathbb{l}$s and a vector $\mathbb{u}$' obtained by projecting the reference vector $\mathbb{u}$s onto the coordinate plane Xs-Ys is obtained as follows:

$\theta$tch = $\tan^{-1}$(Usy/Usx)     (3)

An incremental correction amount $\theta$i at the time the tool is subjected to a rotational correction can be determined in accordance with the following equation based on $\theta$tch and the absolute value $\theta$abs of a rotational correction amount sensed on the sensor side:

$\theta$i = $\theta$abs - $\theta$tch     (4)

More specifically, the amount of tool position offset is correctly revised by rotating the tool about the Zs axis of the sensor coordinate system through an angle of rotation $\theta$i. The corrected tool vectors are obtained from

$$\begin{pmatrix} Ucx \\ Ucy \\ Ucz \end{pmatrix} = \begin{pmatrix} Lsx & Msx & Nsx \\ Lsy & Msy & Nsy \\ Lsz & Msz & Nsz \end{pmatrix} \begin{pmatrix} Ci & -Si & 0 \\ Si & Ci & 0 \\ 0 & 0 & 0 \end{pmatrix} \begin{pmatrix} Usx \\ Usy \\ Usz \end{pmatrix} \quad \ldots (5)$$

where Si = sin$\theta$i, Ci = cos 0i.

Substituting Eq. (2) into Eq. (5) and rearranging gives us

$$[\mathbb{u}c] = [\mathbb{S}] \begin{pmatrix} Ci & -Si & 0 \\ Si & Ci & 0 \\ 0 & 0 & 0 \end{pmatrix} [\mathbb{S}]^{-1} [\mathbb{u}] \quad \ldots (6)$$

This expresses the tool vector after it has been corrected so as to be brought into coincidence with a vector obtained by projecting the gripping direction vector of the workpiece onto the X-Y plane. It should be noted that

$$[\mathbb{S}] = [\mathbb{l}s\ \mathbb{m}s\ \mathbb{n}s].$$

Fig. 2 is a block diagram illustrating an example of a teach/playback-type robot. A robot 10 has a hand 11 on which a tool 13 is mounted for gripping a supplied workpiece 12 at a predetermined position. The workpiece 12 is e.g. a pipe joint supplied to the robot 10 automatically. The gripping direction vector w of the workpiece forms a predetermined angle with the surface on which the workpiece rests.

The robot 10 has a fundamental coordinate system X-Y-Z and is connected to a robot control unit 15 having a vision sensor 14 such as an industrial television. The robot control unit 15 has a memory 15a for storing robot command data, a control program memory (ROM) 15b, a processor 15c and a data memory 15d. The processor 15c executes the aforementioned rotational correction processing as well as other processing under the control of the control program. The memory 15a stores robot command data for controlling movement of the hand 11 of robot 10 along a predetermined path and for causing the hand to grip the workpiece 12 at the taught point P.

The vision sensor 14, which is connected to the processor 15c, is fixedly arranged in a coordinate system having an X-Y coordinate plane parallel to the surface on which the workpiece 12 rests. When the robot command data contains a preparatory code G45 for positional correction, the vision sensor executes predetermined picture processing and supplies the memory 15d with an input of data relating to a vector w' obtained by projecting the gripping direction vector w of the workpiece 12 onto the X-Y plane. The data memory 15 stores the unit vectors along respective axes of the tool coordinate system set for the tool 13. These unit vectors are stored as data in the fundamental coordinate system of the robot 10.

In the robot system so constructed, data relating to the gripping direction vector w' of workpiece 12 supplied from the vision sensor 14 to the robot control unit 15 are supplied as data indicative of an angle formed with a predetermined axis of the sensor coordinate system. The corrected tool vector expressed by Eq. (6) is obtained by using the angle data so that command data for the robot 10, namely command values for each drive axis of the hand, may be prepared.

With the workpiece 12 in the above-described embodiment, the gripping direction vector w is not necessarily parallel to the plane of the sensor coordinate system. However, in a case where the workpiece is a rectangular parallelepiped, the gripping direction vector will always lie parallel to the surface on which the workpiece rests. In any case, positional deviation of the workpiece placed on the X-Y plane is eliminated by arranging the optic axis of the vision sensor 14 in parallel with the Z axis of the sensor coordinate system.

As described in detail above, the amount of tool position offset can be corrected in the above-described embodiment merely by rotating the tool coordinate system about an axis parallel to the Zs axis of the sensor coordinate system at the time a position is taught. This makes it possible for the robot control unit to execute processing simply and, hence, at high speed.

In the foregoing embodiment, the control system is described in relation to an operation for gripping a workpiece. However, the invention is not limited to this embodiment but can be applied to robots in which the working member (tool) mounted on the robot wrist can be made to deal with a variety of situations such as arc welding, and to robots which, in connection with the teaching of the tool end position (TCP), can be set to a plurality of workpiece coordinate systems having a fixed relationship to the fundamental coordinate system of the robot.

## Industrial Applicability

According to the present invention, a command for correcting the positional rotation of a tool coordinate system is obtained through simple processing based on position information from a sensor, this being performed in teaching the end position (TCP) of a working member (tool) mounted on the wrist of a robot and executing a predetermined task. As a result, the position of the tool can be rotatively corrected and controlled.

## Claims

**1.** A robot control system adapted to execute a task at a predetermined position, where a tool (11) of a robot (10) is to grip a workpiece (12), by correcting tool position offset on the basis of information relating to a gripping direction vector (w) of the workpiece (12) and on the basis of a tool reference vector (u), the system comprising,

a sensor (14), for detecting the position of the workpiece (12) and providing said information indicative of the gripping direction vector (w) of the workpiece (12), and

a calculation control unit (15) for calculating from said information indicative of the gripping direction vector (w) of the workpiece (12), and from the tool reference vector (u), an amount of rotational correction necessary for the tool (11),

characterised in that

the sensor (14) is arranged on an axis which is or is parallel to the Z-axis (Zs) of a fixed sensor coordinate system, the X and Y axes (Xs, Ys) of which coordinate system define an X-Y plane which coincides with or is parallel to a surface upon which the workpiece (12) is placed, the sensor having a sensing axis which is or is parallel to the Z-axis (Zs) of the sensor coordinate system thereby to provide information on the gripping direction vector of the workpiece projected onto the X-Y plane,

and in that

the calculation control unit (15) is operable to calculate an amount of rotational correction of the tool (11) around an axis which is or is parallel to the Z-axis (Zs) of the sensor coordinate system from the gripping direction vector of the workpiece (12) as projected onto the X-Y plane utilising also the projection of the tool reference vector onto the X-Y plane.

## Patentansprüche

**1.** Robotersteuersystem zur Durchführung einer Aufgabe an einem vorgegebenen Ort, wobei ein Werkzeug (11) des Roboters (10) ein Werkstück (12) ergreift, durch Korrigieren der Werkzeugfehlstellung auf Grundlage der Kenntnisse zum Greifrichtungsvektor (w) des Werkstücks (12) und auf Grundlage des Werkzeugreferenzvektors (u); das System umfaßt:

einen Sensor (14) zum Erfassen der Position des Werkstücks (12) und zum Bereitstellen der Information zum Greifrichtungsvektor (w) des Werkstücks (12),

eine Rechensteuereinheit (15) zum Berechnen der für das Werkzeug (11) notwendigen Drehkorrektur und zwar aus der Information zum Greifrichtungsvektor (w) des Werkstücks (12) sowie aus dem Werkzeugreferenzvektor (u),

dadurch gekennzeichnet, daß

der Sensor (14) auf einer Achse angeordnet ist, die gleich ist mit oder parallel ist zur Z-Achse (Zs) eines feststehenden Sensorkoordinatensystems, die X- und Y-Achsen (Xs, Ys) dieses Koordinatensystems definieren eine X/Y-Ebene, die zusammenfällt mit oder parallel ist zur Oberfläche, auf der das Werkstück (12) liegt, der Sensor besitzt eine Sensorrichtungsachse, die gleich ist mit oder parallel ist zur Z-Achse (Zs) des Sensorkoordinatensystems, so daß Kenntnisse zum Werkstück-Greifrichtungsvektor als Projektion auf die X/Y-Ebene zur Verfügung gestellt werden und

daß die Rechensteuereinheit (15) so betreibbar ist, daß sie den Betrag der Drehkorrektur des Werkzeugs (11) um eine Achse, die gleich ist mit oder parallel ist zur Z-Achse (Zs) des Sensorkoordinatensystems, berechnet aus der Projektion des Greifrichtungsvektor des Werkstücks (12) auf die X/Y-Ebene, wobei auch die Projektion des Werkzeugreferenzvektors auf die X/Y-Ebene zum Einsatz kommt.

## Revendications

**1.** Système de commande de robot, conçu pour exécuter une tâche en une position prédéterminée, où un outil (11) d'un robot (10) doit saisir une pièce (12), par correction du décalage de position de l'outil en fonction d'informations se rapportant un vecteur ($\omega$) de direction de saisie de la pièce (12) et en fonction d'un vecteur (u) de référence de l'outil, le système comprenant :

un capteur (14) servant à déterminer la position de la pièce (12) et à produire lesdites informations indicatives du vecteur ($\omega$) de direction de saisie de la pièce (12), et

une unité de commande de calcul (15) servant à calculer, à partir desdites informations indicatives du vecteur ($\omega$) de direction de saisie de la pièce (12) et à partir du vecteur (u) de référence de l'outil, la quantité de correction de rotation nécessaire à l'outil (11),

caractérisé en ce que :

le capteur (14) est disposé sur un axe qui est ou est parallèle à l'axe Z (Zs) d'un système de coordonnées de capteur fixes, dont les axes X et Y (Xs, Ys) définissent un plan X-Y qui coïncide ou est parallèle avec une surface sur laquelle la pièce (12) est placée, le capteur ayant un axe de détection qui est ou est parallèle à l'axe Z (Zs) du système de coordonnées du capteur, de manière à produire des informations sur le vecteur de direction de saisie de la pièce projeté sur le plan X-Y,

et en ce que :

l'unité de commande de calcul (15) a pour fonction de calculer une quantité de correction de rotation de l'outil (11) sur un axe qui est ou est parallèle à l'axe Z (Zs) du système de coordonnées du capteur à partir du vecteur de direction de saisie de la pièce (12), tel que projeté sur le plan X-Y, utilisant également la projection du vecteur de référence de l'outil sur le plan X-Y.

Fig. 1

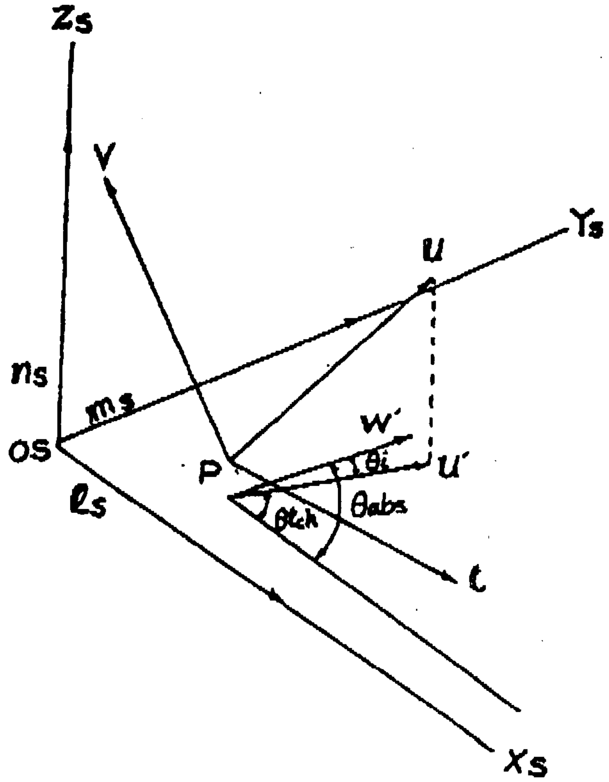
Zs
V
Ys
u
ns
ms
W'
OS
P
θi
U'
ls
βlch
θabs
t
Xs

Fig. 2

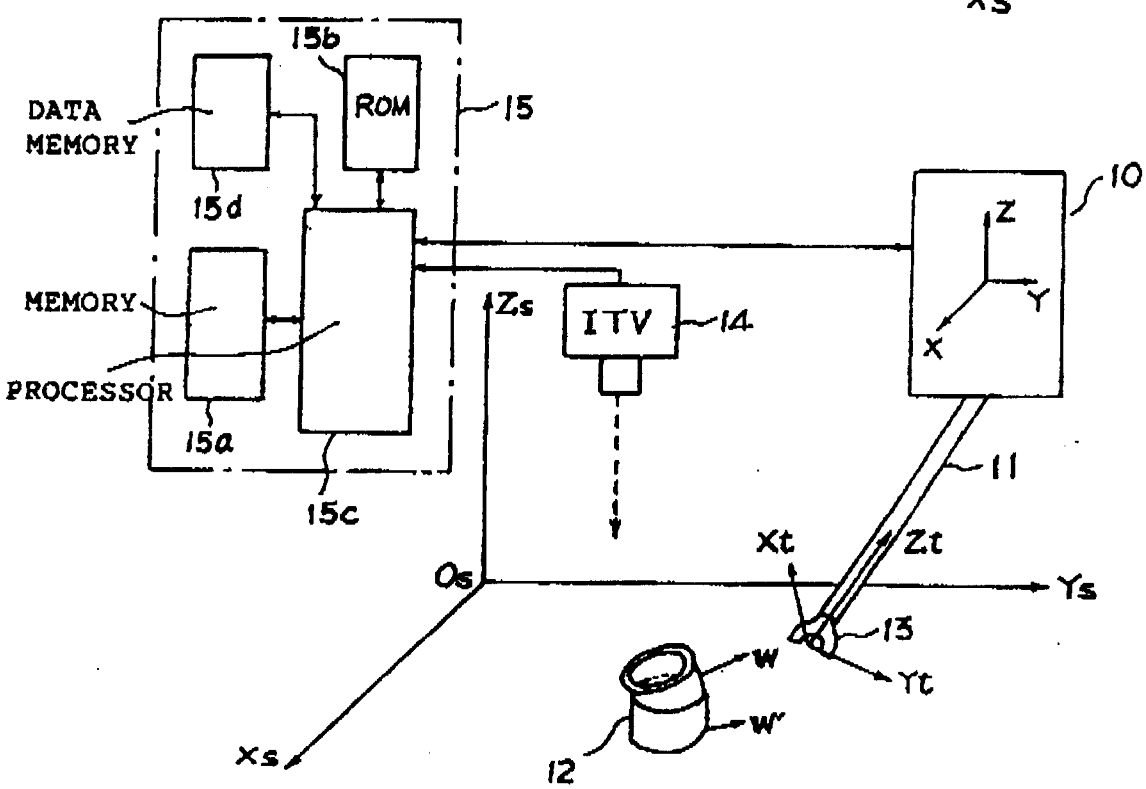
15b
ROM
15
DATA MEMORY
15d
10
Z
Y
X
MEMORY
Zs
ITV
14
PROCESSOR
15a
15c
11
Xt
Zt
Os
Ys
13
W
Yt
W'
12
Xs